# EUROPEAN PATENT APPLICATION

(11) **EP 2 135 793 A2**
(43) Date of publication of application: **23.12.2009**
(21) Application number: 09162676.2
(22) Date of filing: 15.06.2009
(51) Int. Cl.: B62B 5/02

(54) **means of transport for transporting a product over a staircase**

(30) Priority: 13.06.2008 NL 2001683
(71) Applicant: W.C.M. Van Den Broek Beheer B.V., 5427 ED Boekel (NL)
(72) Inventor: Van Den Broek, Wilhelmus, Christianus Maria, 5427 EG, Boekel (NL)
(74) Representative: Verhees, Godefridus Josephus Maria

(57) **Abstract**

A transport device 1 has a vertically oriented frame 3. There are two handles 5 near the top of the frame 3 and a staircase-climbing mechanism 7, for climbing up and down a staircase, is fastened near the bottom of the frame.

The staircase-climbing mechanism 7 has two wheel pairs 9, which can be rotated around an axle 11, so that each wheel 17, 19 comes in turn on a step and thus the transport device climbs upwards. A wheel 17 of each wheel pair 9 also forms a transport wheel for the horizontal transport of the object to be transported.

The transport device 1 also has a lifting mechanism 21 provided with a support element 23 for lifting the object to be transported. The support element 23 is on the same side of the frame 3 as the staircase-climbing mechanism 7 and its height can be adjusted along the frame 3 using the lifting mechanism 21.

## Description

### BACKGROUND OF THE INVENTION:

### Field of the invention

The invention relates to a transport device for transporting an object up and down a staircase, comprising a frame, which during use extends mainly vertically, a staircase-climbing mechanism for climbing up or down a staircase, transport wheels that are connected to the frame or to the staircase-climbing mechanism for the horizontal transport of the object, a support element for supporting the object to be transported, and a lifting mechanism for lifting the object to be transported, in which the staircase-climbing mechanism, seen in a horizontal transport direction, is in front of or behind the frame, and the support element is on the same side of the frame as the staircase-climbing mechanism.

### Prior art

Such a transport device is known from NL-A-1017952. In this known transport device the support element can be moved between a position in front of the staircase-climbing mechanism level with the bottom of the transport wheels, and a position above the staircase-climbing mechanism. The known transport device is designed to move a heavy object, such as a washing machine, up or down a staircase and to place it on a floor. This is the reason it must be possible to lower the support element down to the floor.

Boilers are also heavy and also often have to be transported up a staircase. The known transport device is also suitable for this purpose. Once upstairs, the boiler is usually placed at a distance above the floor against a wall. The boiler can then be fairly easily removed from the support element by two fitters, lifted up and hung on suspension bolts.

### Summary of the invention

An objective of the invention is to provide a transport device of the type described in the preamble with which it is even easier to hang a boiler on a wall on an upper floor. For this purpose the transport device according to the invention is **characterised in that** the support element, using the lifting mechanism, can be moved along the frame between a position at a short distance above the staircase-climbing mechanism and a position at a greater distance above the staircase-climbing mechanism. In this way only one fitter can hang the boiler easily on suspension bolts using the lifting mechanism, by lifting the support element with the boiler on it to the desired height and then hanging it on the suspension bolts. It is therefore not necessary for two fitters to go upstairs to hang up the boiler, so that usually only one of the fitters goes upstairs to lift up the boiler. With the transport device according to the invention this other fitter is not needed and can be employed for something else.

A boiler is usually transported with a vehicle and can be directly placed on the loading element from this vehicle. In this situation it is not necessary for the loading element to be lowered to the floor. For those situations in which a boiler does have to be lifted off a floor, an embodiment of the transport device according to the invention is **characterised in that** the lifting mechanism can also move the support element between the position at a low height above the staircase-climbing mechanism and a position in front of the staircase-climbing mechanism level with the bottom of the transport wheels.

### Brief description of the drawings

The invention will be elucidated more fully below on the basis of drawings in which embodiments of the transport device according to the invention are shown. In these drawings:
Figure 1 shows a first embodiment of the transport device according to the invention in perspective; and
Figure 2 shows a side elevation of a second embodiment of the transport device according to the invention.

### Detailed description of the drawings

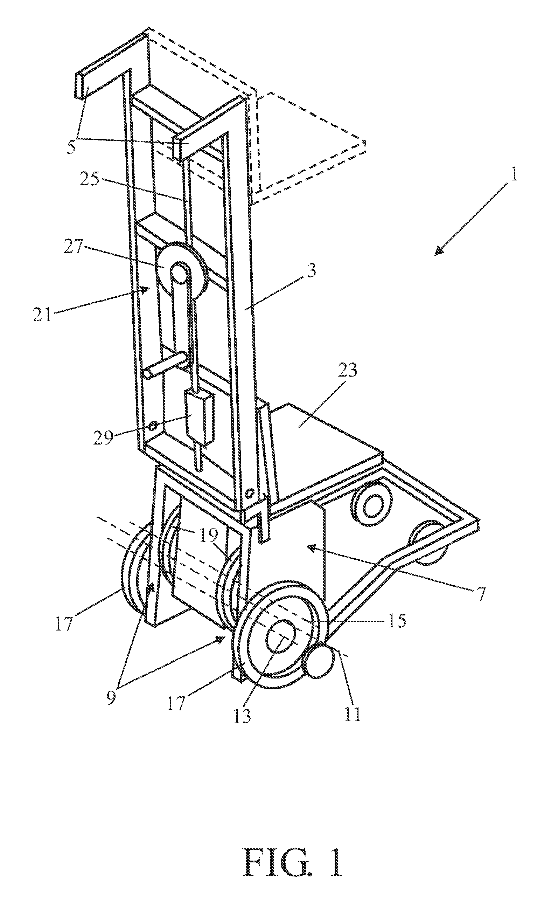

Figure 1 shows a first embodiment of the transport device according to the invention. The transport device 1 has a mainly vertically oriented frame 3. There are two handles 5 near the top of the frame 3, which extend backwards. There is a staircase-climbing mechanism 7 fastened near the bottom of the frame 3, for climbing up or down a staircase. The staircase-climbing mechanism 7 is at the front of the frame 3.

The staircase-climbing mechanism 7 has two wheel pairs 9, which can be rotated around an axle 11, in the middle of the axles 13, 15 of the wheels 17, 19, so that each wheel 17, 19 comes onto a step in turn and thus the transport device climbs upwards. A wheel 17 of each wheel pair 9 also forms a transport wheel for the horizontal transport of the object to be transported. Refer to the European patent application EP-A-0 287 857 for an accurate description of the staircase-climbing mechanism 7.

The transport device 1 also has a lifting mechanism 21 for lifting a support element 23 that lifts the object to be transported. The lifting mechanism 21 has a wire shaft 25, which can be turned by single drive wheel 27, and a carriage 29 that can be moved alongside it, which is fastened to the support element 23. The support element 23 is on the same side of the frame 3 as the staircase-climbing mechanism 7. The support element 23 can be moved using the lifting mechanism 21 along the frame 3 between a position at a short distance above the staircase-climbing mechanism 7 (shown by solid lines) and a position at a greater distance above the staircase-climbing mechanism (shown by discontinuous lines).

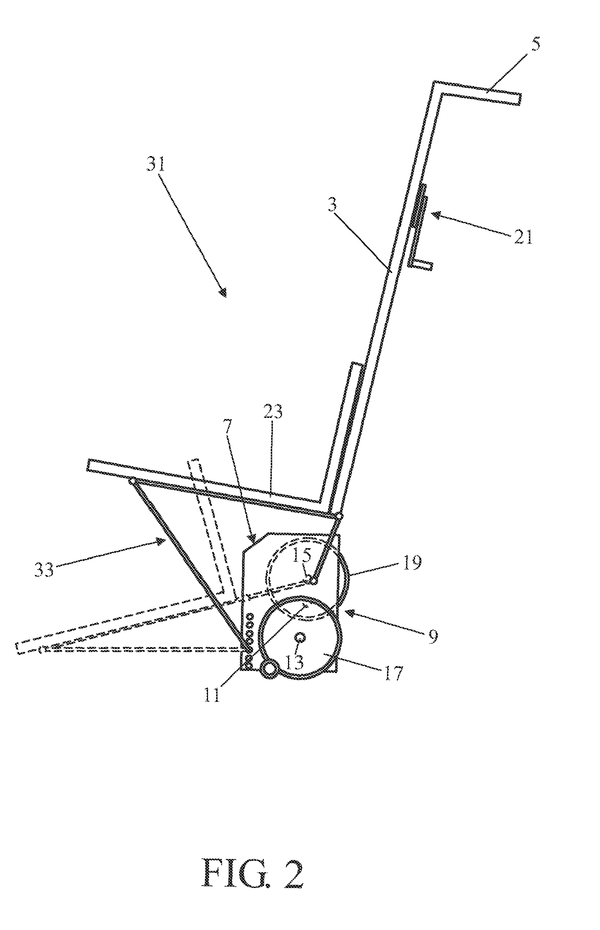

Figure 2 shows a second embodiment of the transport device according to the invention. All parts of this second embodiment which are equal to those of the first embodiment are shown with the same reference numbers. In this transport device 31 the lifting mechanism 21 can also move the support element 23 between the position at a low height above the staircase-climbing mechanism 7 (shown by solid lines) and a position in front of the staircase-climbing mechanism level with the bottom of the wheels 17 (shown by discontinuous lines). For this purpose the lifting mechanism 21 also has a rod mechanism 33 with which this movement can be achieved. Refer to Dutch patent NL 1017952 for an accurate description of this rod mechanism 33 of the lifting mechanism 21.

Although in the above the invention is explained on the basis of the drawings, it should be noted that the invention is in no way limited to the embodiments shown in the drawings. The invention also extends to all embodiments deviating from the embodiments shown in the drawings within the context defined by the claims.

## Claims

1. Transport device for transporting an object up and down a staircase, comprising:
- a frame that extends mainly vertically during use,
- a staircase-climbing mechanism for climbing up or down a staircase,
- transport wheels that are connected to the frame or to the staircase-climbing mechanism, for the horizontal transport of the object to be transported,
- a support element for carrying the object to be transported, and
- a lifting mechanism for lifting the object to be transported,
in which the staircase-climbing mechanism, seen in a horizontal transport direction, is in front of or behind the frame, and the support element is on the same side of the frame as the staircase-climbing mechanism, **characterised in that** the support element, using the lifting mechanism, can be moved along the frame between a position at a short distance above the staircase-climbing mechanism and a position at a greater distance above the staircase-climbing mechanism.

2. Transport device according to claim 1, **characterised in that** the lifting mechanism can also move the support element between the position at a low height above the staircase-climbing mechanism and a position in front of the staircase-climbing mechanism level with the bottom of the transport wheels.
